# EUROPÄISCHE PATENTSCHRIFT

(11) **EP 1 776 255 B1**
(45) Veröffentlichungstag und Bekanntmachung des Hinweises auf die Patenterteilung: **26.10.2011**
(21) Anmeldenummer: 05759140.6
(22) Anmeldetag: 30.06.2005
(51) Int. Cl.: B60Q 1/04, B60Q 1/26

(54) **KRAFTFAHRZEUGLEUCHTE MIT EINER AUS KUNSTSTOFF GEFERTIGTEN LICHTSCHEIBE**
MOTOR VEHICLE LIGHT COMPRISING A PLASTIC COVER DISC
BLOC OPTIQUE DE VEHICULE A MOTEUR DOTE D'UN DIFFUSEUR EN PLASTIQUE

(30) Priorität: 11.08.2004 DE 102004039004
(43) Veröffentlichungstag der Anmeldung: 25.04.2007
(73) Patentinhaber: Bayerische Motoren Werke Aktiengesellschaft, 80809 München (DE)
(72) Erfinder: EFFNER, Torben, 84034 Landshut (DE); GELTINGER, Florian, 84163 Marklkofen (DE)
(74) Vertreter: Bullwein, Fritz
(86) Internationale Anmeldenummer: PCT/EP2005/007039
(87) Internationale Veröffentlichungsnummer: WO 2006/018067

(56) Entgegenhaltungen:
- EP-A- 1 110 816
- EP-A- 1 391 348
- DE-A1- 19 805 771
- GB-A- 2 284 305
- US-A1- 2002 012 251
- US-B1- 6 739 733

## Beschreibung

Die Erfindung betrifft eine in die aus kunststoff gefertigte Außenhaut eines kraftfahrzeugs eingearbeitete Kraftfahrzeugleuchte mit einer aus Kunststoff gefertigten Lichtscheibe, und einer hinter der Oberfläche der Lichtscheibe angebrachten Leuchteinheit.

Konventionell aufgebaute Kraftfahrzeugieuchten sind im Wesentlichen aus einem Leuchtentopf, einer in den Leuchtentopf eingesetzten Leuchteinheit und einer den Leuchtentopf verschließenden Lichtscheibe zusammengesetzt. Die Leuchteinheit besteht dabei aus mindestens einem Leuchtmittel (z.B. Glühlampe, Leuchtdiode, Elektrolumineszenzfolie), ggf. einem Reflektor, Mitteln zur Aufnahme des Leuchtmittels (z.B. Lampenfassung), ggf. einer elektrischen Schaltung zum Betreiben des Leuchtmittels und den typischerweise durch den Leuchtentopf nach außen geführten elektrischen Anschlüssen der firaflfahmeugleuchte. Ein Reflektor kann dabei gleichzeitig einen Teil des Leuchtentopfs einer Kraftfahrzeugieuchte bilden. Insbesondere bei der Verwendung von Leuchtdioden als Leuchtmittel dient häufig der Schaltungsträger einer elektrischen Schaltung gleichzeitig zur Aufnahme der Leuchtdioden. Die Lichtscheibe einer Kraftfahrzeugleuchte besitzt neben der Funktion des mechanisch sicheren und feuchtigkeitsresistenten Abschließens der Kraftfahrzeugleuchte zum Fahrzeugäußeren hin häufig auch optische Funktionen. Dabei wird durch die Verwendung geeigneter Materialien und geeignete Formung der Lichtscheibe eine gewünschte Lichtleitung und/oder -brechung umgesetzt.

Kraftfahrzeugleuchten stellen im Herstellungsprozess eines Kraftfahrzeugs einen erheblichen Kostenfaktor dar, da bei der Planung, der Bereitstellung und dem Einbau der Kraftfahrzeugleuchten ins Fahrzeug typischerweise erheblicher Aufwand hinsichtlich Konstruktion, Montage und Logistik entsteht.

Aus konstruktiver Sicht müssen fahrzeugseitig und leuchtenseitig Befestigungselemente (z.B. Klammem, Klipse, Schraubverbindungen) vorgesehen werden. Neben dem eigentlichen Vorsehen dieser Befestigungselemente ist im Gesamtkonzept des Fahrzeugs der von den Befestigungselementen eingenommene und der zur Sicherstellung der Erreichbarkeit der Betestigungselemente bei der Montage enorderliche Bauraum einzuplanen.

Logistischer Aufwand entsteht beispielsweise für die montagegerechte Bereitstellung sämtlicher Komponenten der Kraftfahrzeugteuchte bzw. der Kraftfahrzeugtauchte als Komplettteit sowie für die Bereitstellung der Befestigungselemente.

Im Rahmen der Montage ist die Kraftfahrzeugteuchte zunächst durch die Befestigungselemente am Gesamtfahrzeug anzubringen. Anschließend ist zum Sicherstellen des ästhetischen Erscheinungsbilds des Kraftfahrzeugs in einem mehrschrittigen Prozess das Fugenmaß der Kraftfahrzeugteuchte zu allen benachbarten Teilen des Kraftfahrzeugs exakt einzustellen.

Zur Lösung eines Teils der genannten Probleme ist es bekannt, entweder den Leuchtentopf oder die Lichtscheibe der Kraftfahrzeugteuchte in ein Kunststoffbauteil zu integrieren, welches einen Teil der Außenhaut des Kraftfahrzeugs darstellt. Beispielsweise ist aus der US 2002/008539 A1 eine Kraftfahrzeugleuchte bekannt, deren Lichtscheibe durch ein Spritzguss-Verfahren in einen Stoßfänger aus Kunststoff integriert ist. Insbesondere entfällt dadurch das Einstellen des Fugenmaßes.

Bei einer Kraftfahrzeugleuchte gemäß der US 2002/008539 A1 wird jedoch, abgesehen von der Integration einer Komponente, der weiter oben beschriebene konventionelle Aufbau einer Kraftfahrzeugleuchte prinzipiell beibehalten. Es wird zwar eine Komponente der Kraftfahrzeugleuchte, hier die Lichtscheibe, in die Außenhaut integriert. Die beiden anderen wesentlichen Komponenten der Kraftfahrzeugleuchte, hier Leuchtentopf und Leuchteinheit, werden jedoch weiterhin als separate, nicht in die Außenhaut integrierte Komponenten vorgesehen. Die meisten der oben genannten Nachteile einer Kraftfahrzeugleuchte bleiben somit bestehen. Insbesondere werden weiterhin Befestigungselemente benötigt, weshalb unter anderem ein verhältnismäßig großes Bauraumvolumen für die Befestigungselemente und deren Erreichbarkeit vorzusehen ist. Zudem müssen weiterhin bestimmte Komponenten der Kraftfahrzeugleuchte und Befestigungsmittel durch entsprechenden logistischen Aufwand zur Montage bereitgestellt und montiert werden.

US 6,739,733 B1 offenbart eine Kraftfahrzeugleuchte mit einer aus Kunststoff gefertigten Lichtscheibe und einer hinter der Oberfläche der Lichtscheibe angebrachten Leuchteinheit, wobei die Leuchteinheit als Ergebnis eines Spritzguss-Verfahrens formschlüssig vom Kunststoff der Lichtscheibe ummantelt und durch die Ummantelung lagefest an der Lichtscheibe befestigt ist.

Der voniegenden Erfindung liegt die Aufgabe zugrunde, eine Kraftfahrzeugteuchte zu schatten, welche so in ein Kunststoffbauteil der Außenhaut eines Kraftfahrzeugs eingearbeitet ist, dass für die Kraftfahrzeugteuchte und ihre Montage ein möglichst geringes Bauraumvolumen vorzusehen ist.

Gelöst wird die Aufgabe durch die Merkmale des Anspruchs 1.

Die Leuchteinheit muss somit im Montageprozess des Kraftfahrzeugs nicht eigens durch Befestigungselemente in Ihrer Lage bezüglich der Lichtscheibe, oder der Außenhaut fixiert werden. Durch den Wegfall der Befestigungselemente und der mit der Befestigung verbundenen Montageschritte wird das Volumen des für die Kraftfahrzeugleuchte vorzusehenden Bauraums gegenüber dem Stand der Technik erheblich verringert.

Zum einen nimmt die Kraftfahrzeugleuchte zum Fahrzeuginneren hin selbst nur den Bauraum ein, der durch das Volumen der Leuchteinheit definiert ist. Hinzu kommt bei bestimmten Ausführungsformen einer erfindungsgemäßen Vorrichtung noch eine die Leuchteinheit zum Fahrzeuginneren hin überdeckende Kunststoffschicht. Das Bauraumvolumen dieser Kunststoffschicht, sofern sie vorhanden ist, ist jedoch gegenüber dem Bauraumvolumen typischer Befestigungselemente, die üblicherweise deutlich über die Leuchteinheit hinausragen, verhältnismäßig gering. Zudem entfällt durch den Verzicht auf Befestigungselemente die Notwendigkeit, Bauraum für die Erreichbarkeit der Befestigungselemente bei der Montage vorzusehen.

Gemäß einer vorteilhaften Weiterbildung der Erfindung ist die Leuchteinheit auch auf der zum Fahrzeuginneren gewandten Seite so vom Kunststoff der Lichtscheibe ummantelt, dass dieser die gegen mechanische Beschädigung und das Eindringen von Feuchtigkeit schützende Funktion eines Leuchtentopfes erfüllt. Alternativ kann die Leuchteinheit zu diesem Zweck auf der zum Fahrzeuginneren gewandten Seite von einem Kunststoff- oder Metallgehäuse abgedeckt ausgeführt werden.

Von der Fahrzeug-Außenseite gesehen ist die Leuchteinheit, einer erfindungsgemäßen Kraftfahrzeugleuchte in jedem Fall hinter der Oberfläche der Lichtscheibe angeordnet und somit durch diese geschützt.

Ein erfindungsgemäße Kraftfahrzeugieuchte mit besonders geringen Anforderungen an das Volumen des zur Verfügung stehenden Bauraums kann dann geschaffen werden, wenn die Leuchteinheit, selbst mit geringer Bautiefe ausgeführt ist. Typischerweise ist dies bei reflektorfreien Kraftfahrzeugleuchten unter Verwendung von anorganischen Leuchtdioden (LEDs), organischen Leuchtdioden (OLEDs) und/oder Elektrolumineszenzfolien (EL-Folien) als Leuchtmittel gegeben. Durch die Verwendung einer Leuchteinheit mit geringer Bautiefe kann auch die Bautiefe der Kraftfahrzeugleuchte gering gehalten werden. Eine erfindungsgemäße Kraftfahrzeugleuchte mit geringer Bautiefe ist in der Planung des Bauraums in einem Kraftfahrzeug lediglich als geringe Auswölbung des Kunststoffbauteils zu berücksichtigen, in welches die Kraftfahrzeugleuchte integriert ist. Ist die Bautiefe der Leuchteinheit so gering, dass die gemeinsame Dicke von Lichtscheibe und Leuchteinheit die Dicke der umgebenden Außenhaut nicht übersteigt, verschwindet selbst eine solche Auswölbung.

Gefertigt werden kann eine erfindungsgemäße Kraftfahrzeugieuchte, indem die Leuchteinheit nicht, wie gemäß dem Stand der Technik üblich, erst nach der Fertigung der Kunststoffteile Lichtscheibe und Außenhaut mit diesen zusammengefügt wird, sondern bereits in das Spritzguss-Verfahren zur Herstellung zumindest der Lichtscheibe, gegebenenfalls beider Kunststoffteile, einbezogen wird.

Gemäß einer ersten variante die nicht Teil der Erfindung ist, sind die Lichtscheibe und die umgebende Außenhaut als ein einziges, in einem Mehrkomponenten-Spritzguss-Verfahren gefertigtes Kunststoffbauteil ausgebildet. Im Fertigungsprozess wird die Leuchteinheit dabei so in das Spritzguss-Verfahren einbezogen, dass beim entstehenden Kunststoffbauteil die Leuchteinheit ganz oder teilweise in solcher Art und Weise formschlüssig vom Kunststoff der Lichtscheibe ummantelt ist, dass sie durch die Ummantelung lagefest an der Lichtscheibe befestigt ist. Im Falle einer vollständigen Ummantelung durch den Kunststoff der Lichtscheibe folgt die lagefeste Befestigung der Leuchteinheit an der Lichtscheibe in selbstverständlicher Weise daraus, dass die Leuchteinheit in die Lichtscheibe eingeschlossen ist. Die Möglichkeit der StromVersorgung und Ansteuerung der Leuchteinheit durch die Fahrzeugelelstronik ist gewährleistet, indem entsprechende Anschlüsse von der Leuchteinheit aus dem Kunststoff herausgeführt sind.

Eine zweite Variante der Erfindung unterscheidet sich von der oben beschriebenen ersten Variante dadurch, dass die Leuchteinheit, nicht ausschließlich durch den Kunststoff der Lichtscheibe ummantelt und an der Lichtscheibe befestigt ist, sondern zudem die Leuchteinheit teilweise durch den Kunststoff der umgebenden Außenhaut ummantelt und somit sowohl an der Lichtscheibe als auch an der Außenhaut befestigt ist. Diese zweite Variante der Erfindung besitzt den Vorteil, dass durch die in beide Kunststoffkomponenten eingearbeitete Leuchteinheit die Festigkeit der Verbindung zwischen Lichtscheibe und Außenhaut erhöht werden kann. Zudem wird auf diese Weise eine Ausleuchtung der Lichtscheibe in deren Randbereichen begünstigt, da Leuchtmittel, deren Licht durch die Randbereiche der Lichtscheibe an die Fahrzeugumgebung abgegeben werden soll, nicht auf dem äußersten Rand eines Schaltungsträgers platziert sein müssen.

Gemäß einer dritten Variante die nicht Teil der Erfindung ist, ist eine Kraftfahrzeugleuchte so gestaltet, dass zur Fertigung von Lichtscheibe und Außenhaut kein Mehrkomponenten-Spritzguss-Verfahren anzuwenden ist. Stattdessen sind Lichtscheibe und Außenhaut als Kunststoffbauteile ausgeführt, die zunächst separat gefertigt werden können. In der Außenhaut ist eine zur Aufnahme der Lichtscheibe geeignete Öffnung vorgesehen, in welche die Lichtscheibe später als Einlegeteil eingesetzt werden kann. Die Leuchteinheit ist, wie bereits bei der ersten Variante die nicht Teil der Erfindung ist, ganz oder teilweise in solcher Art und Weise formschlüssig vom Kunststoff der Lichtscheibe ummantelt, dass sie durch die Ummantelung lagefest an der Lichtscheibe befestigt ist. Die Lichtscheibe mit integrierter Leuchteinheit ist in die zu ihrer Aufnahme geeignete Öffnung der Außenhaut eingesetzt und durch eine lösbare oder unlösbare Rastverbindung, durch eine Klebe- oder Schweißverbindung oder durch ein Spritzguss-Verfahren (z.B. Anspritzen oder Umspritzen) an der Außenhaut befestigt. Die Befestigung der Lichtscheibe mit integrierter Leuchteinheit an der Außenhaut kann im Fertigungsprozess nach der separaten Fertigung der Außenhaut und der Lichtscheibe mit integrierter Leuchteinheit erfolgen.

Besonders geeignete als Leuchtmitel für eine erfindungsgemäße Kraftfahrzeugleuchte sind anorganische oder organische Leuchtdioden sowie Elektrolumineszenzfolien. Solche Leuchtrmittel erlauben eine flache Bauform der Leuchteinheit. Insbesondere ist bei bestimmte Typen von Leuchtdioden zudem zum einen die Robustheit des Leuchtmittels so hoch, dass dieses unter entsprechenden Fertigungsbedingungen bei der Kunststoff-Ummantelung im Spritzguss-Verfahren nicht beschädigt wird. Zum anderen stellt aufgrund der hohen Zuverlässigkeit und Lebensdauer von Leuchtdioden der Sachverhalt, dass das Leuchtmittel der meisten Ausführungsformen einer erfindungsgemäßen Krsftfahrzeugleuchte nur mit sehr hohem Aufwand gewechselt werden kann, in der Praxis keinen Nachteil dar.

Anhand der beigefügten Zeichnungen wird die Erfindung im Folgenden weiter erläutert. Dabei zeigen jeweils in schematischer Darstellung beispielhaft
- Fig. 1: eine Querschnittsansicht durch eine Kraftfahrzeugleuchte gemäß einer ersten variante die nicht Teil der Erfindung ist, mit teilweise in die Lichtscheibe eingeschlossener Leuchteinheit,
- Fig. 2: eine Querschnittsansicht durch eine Kraftfahrzeugleuchte gemäß einer ersten Variante die nicht Teil der Erfindung ist, mit vollständig in die Lichtscheibe eingeschlossener Leuchteinheit,
- Fig. 3: eine Querschnittsansicht durch eine Kraftfahrzeugleuchte gemäß einer zweiten Variante der Erfindung und
- Fig. 4: eine Querschnittsansicht durch eine Kraftfahrzeugleuchte gemäß einer dritten Variante die nicht Teil der Erfindung ist, mit an der Außenhaut angespritzter Lichtscheibe.
- Fig. 5: eine Querschnittsanstcbt durch eine. Kraftfahrzeugleuchte gemäß einer dritten Variante die nicht Teil der Erfindung ist, mit durch eine Rastverbindung an der Außenhaut befestigter Lichtscheibe.

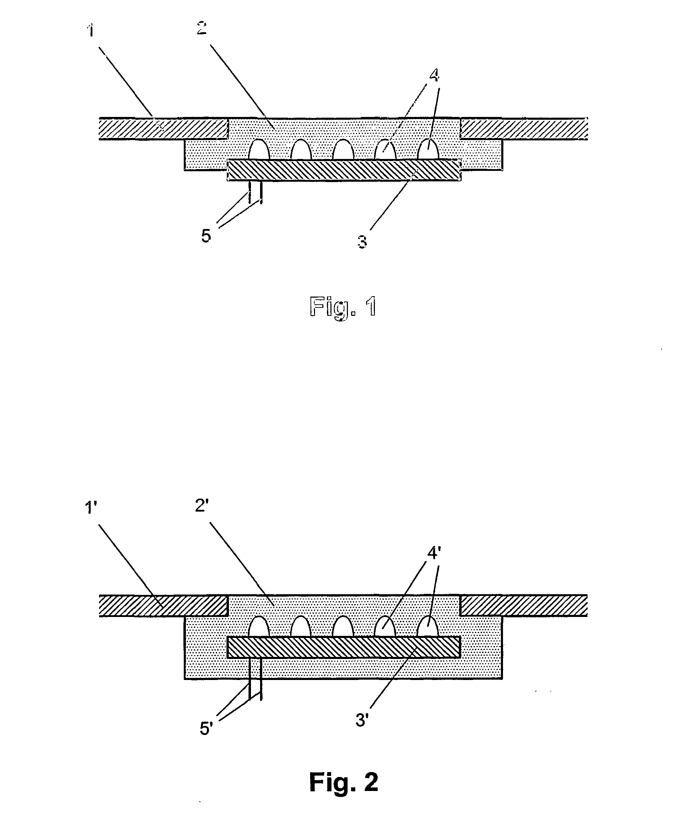

Fig. 1 zeigt schematisch eine Querschnittsansicht durch eine Kraftfahrzeugleuchte gemäß einer ersten Variante die nicht Teil der Erfindung ist. Die Lichtscheibe 2 der Kraftfahrzeugleuchte und ein zur Außenhaut des Kraftfahrzeugs gehöriges Kunststoffelement 1, welches die Lichtscheibe 2 umgibt, sind durch ein Mehrkomponenten-Spritzguss-Verfahren als ein <einziges Kunststoffbauteil gefertigt. Die Lichtscheibe 2 ist somit ummittelbar in das zur Außenhaut des Kraftfahrzeugs gehörige Kunststoffelement 1 eingearbeitet. Die Leuchteinheit, welches die auf einem Schaltungsträger 3 angebrachten Leuchtmittel 4 (hier: Leuchtdioden) umfasst, ist teilweise formschlüssig vom Kunststoff der Lichtscheibe 2 ummantelt. Im Fertigungsprozess wird die Leuchteinheit 3,4 hierzu in geeigneter Weise in das Mehrkomponenten-Spritzguss-Verfahren zur Herstellung der Außenhaut 1 mit integrierter Lichtscheibe 2 einbezogen. Durch die formschlüssige Ummantelung ist die Leuchteinheit 3,4 lagefest an der Lichtscheibe 2 befestigt. Von der Fahreug-Außenseite gesehen ist die Leuchteinheit 3,4 vollständig hinter der Oberfläche der Lichtscheibe 2 angeordnet. Zur Stromversorgung und Ansteuerung der Leuchteinheit 3,4 durch die Fahrzeuglektronik sind auf dem Schaltungsträger 3 entsprechende elektrische Anschlüsse 5 vorgesehen.

Fig. 2 zeigt ebenfalls eine Querschnittsansicht durch eine Kraftfahrzeugleuchte gemäß einer ersten Variante die nicht Teil der Erfindung ist. Dabei ist die aus dem Schaltungsträger 3' und den darauf angebrachten Leuchtmitteln 4' bestehende Leuchteinheit vollständig in die Lichtscheibe 2' der erfindungsgemäßen Kraftfahrzeugleuchte eingeschlossen. Die Leuchteinheit 3',4' ist auf diese Weise auch auf der zum Fahrzeuginneren gewandten Seite so vom Kunststoff der Lichtscheibe 2' ummantelt, dass dieser sie, vergleichbar mit einem Leuchtentopf, gegen mechanische Beschädigung und das Eindringen von Feuchtigkeit schützt. Die Möglichkeit der Stromversorgung und Ansteuerung der Leuchteinheit 3',4' durch die Fahrzeugelektronik ist jedoch weiterhin gewährleisten, indem die elektrischen Anschlüsse 5' von der Leuchteinheit 3',4' aus dem Kunststoff der Lichtscheibe 2' herausgeführt sind. Die Lichtscheibe 2' ist, wie bei der Kraftfahrzeugleuchte nach Fig. 1, auch bei der Kraftfahrzeugleuchte nach Fig. 2 gemeinsam mit dem zur Außenhaut des Kraftfahrzeugs gehörigen Kunststoffelement 1' durch Fertigung in einem Mehrkomponenten-Spritzguss-Verfahren als ein einziges Kunststoffbauteil ausgeführt.

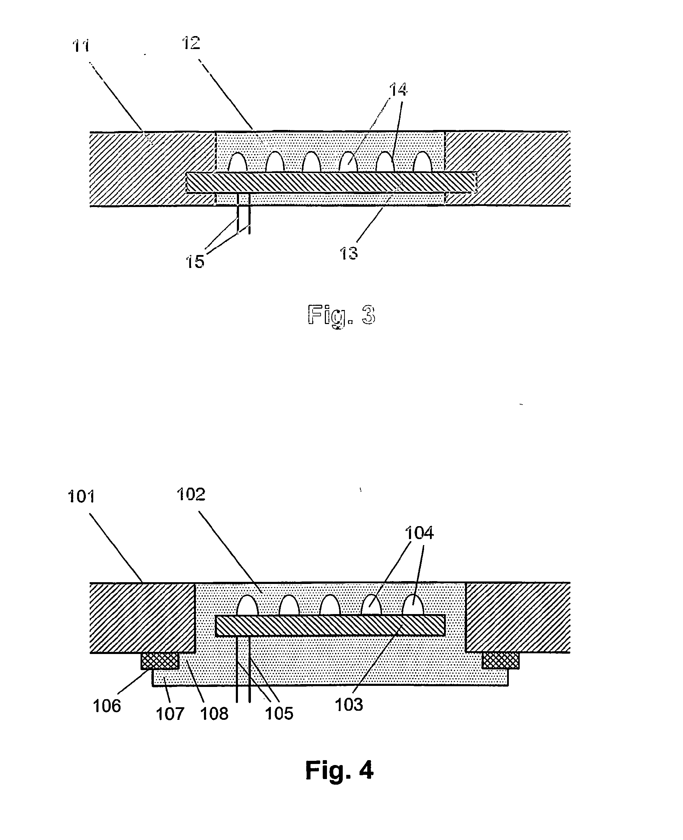

Eine Querschnittsansicht durch eine Kraftfahrzeugleuchte gemäß einer zweiten Variante der Erfindung ist in Fig. 3 dargestellt. Die zweite Variante der Erfindung unterscheidet sich von der ersten im Wesentlichen darin, dass die aus dem Schaltungsträger 13 und den darauf angebrachten Leuchtmitteln 14 zusammengesetzte Leuchteinheit nicht ausschließlich vom Kunststoff der Lichtscheibe 12, sondern zudem teilweise vom Kunststoff der umgebenden Außenhaut 11 ummantelt ist. Auch die Befestigung der Leuchteinheit 13,14 ist somit durch ein Zusammenwirken von Lichtscheibe 12 und Außenhaut 11 realisiert. Zudem wird die mechanische Verbindung zwischen Lichtscheibe 12 und Außenhaut 11 durch die von beiden ummantelte Leuchteinheit 13,14 verstärkt. Eine von der Fahrzeug-Außenseite gesehen gute Ausleuchtung der Lichtscheibe 12 in deren Randbereichen ist durch die Anordnung einzelner Leuchtmittel 14 hinter den Randbereichen der Oberfläche der Lichtscheibe 12 realisiert. Da der Schaltungsträger 13 bis in den Kunststoff der Außenhaut 11 hineinragt, müssen die Leuchtdioden 14 hierzu nicht auf dem äußersten Rand des Schaltungsträgers 13 platziert sein. Wieder ermöglichen elektrische Anschlüsse 15 eine Stromversorgung und Ansteuerung der Leuchteinheit 13,14.

In Fig. 4 ist eine Querschnittsansicht durch eine Kraftfahrzeugleuchte gemäß einer dritten Variante die nicht Teil der Erfindung ist, dargestellt. Dabei ist die Lichtscheibe 102 im dargestellten Fall durch eine Klebeverbindung an der Außenhaut 101 befestigt. Ein wesentliches Merkmal der dritten Variante der Erfindung besteht darin, dass zur Fertigung von Außenhaut 101 und Lichtscheibe 102 kein Mehrkomponenten-Spritzguss-Verfahren erforderlich ist. Stattdessen sind die Lichtscheibe 102 und die Außenhaut 101 als zunächst separat gefertigte Kunststoffbauteile ausgeführt. In der Außenhaut 101 wurde im Fertigungsprozess eine zur Aufnahme der Lichtscheibe geeignete Öffnung vorgesehen, in welche die Lichtscheibe 102 als Einlegeteil eingesetzt ist. Die aus Schaltungsträger 103 und Leuchtmitteln 104 bestehende Leuchteinheit ist formschlüssig vom Kunststoff der Lichtscheibe 102 ummantelt und durch die Ummantelung lagefest an der Lichtscheibe 102 befestigt. Hierzu wurde die Leuchteinheit 103,104, wie bereits bei der ersten und zweiten Variante, in geeigneter Weise in das Spritzguss-Verfahren zur Herstellung der Lichtscheibe 102 einbezogen.

Das Einlegeteil Lichtscheibe 102 mit integrierter Leuchteinheit 103,104 ist im in Fig. 4 dargestellten Fall durch eine Klebeverbindung an der Außenhaut 101 befestigt. Der Klebevorgang erfolgt im Fertigungsprozess nach der separate Fertigung der Außenhaut 101 und des Einlegeteils Lichtscheibe 102 mit integrierter Leuchteinheit 103,104. Das Klebemittel 106 wird hierzu zwischen Außenhaut 101 und Lichtscheibe, 102 eingebracht. Für die Klebeverbindung sind an der Lichtscheibe 102 im dargestellten Fall ein Klebeflansch 107 und ein Steg 108 als Abstimmrippe vorgehalten. In ansonsten vergleichbarer Weise kann das Einlegeteil Lichtscheibe 102 mit integrierter Leuchteinheit, 103,104 statt durch eine Klebeverbindung durch eine Rastverbindung, durch eine Schweißverbindung oder durch ein Spritzguss-Verfahren (z.B. Anspritzen oder Umspritzen) in der Öffnung der Außenhaut 101 befestigt sein.

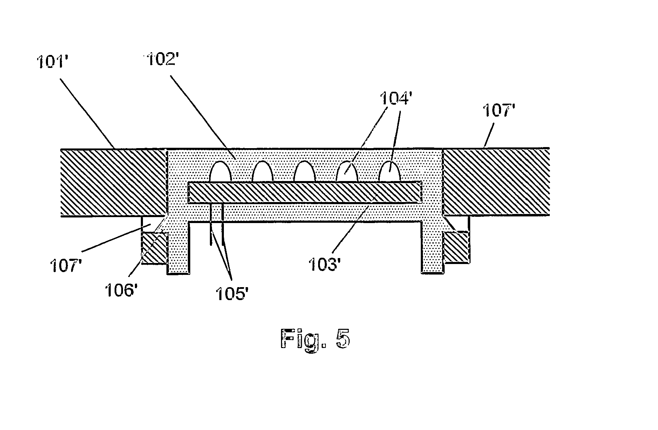

Insbesondere die Verwendung einer Rastverbindung, dargestellt in Fig. 5, birgt dabei verschiedene weitere Vorteile. Zum einen kann die Lichtscheibe 102' mit integrierter Leuchteinheit 103',104' an nahezu beliebiger Stelle im Fertigungsprozess mit geringem Aufwand in die Außenhaut 101' eingesetzt und/oder vorübergehend wieder von dieser entfernt werden. So kann beispielsweise die Notwendigkeit zum Abdecken der Lichtscheibe 102' im Falle der Lackierung der Außenhaut 101' vermieden werden. Zum anderen erlaubt die Verwendung einer Rastverbindung, den isolierten Austausch der Lichtscheibe 102' mit integrierter Leuchteinheit 103',104' im Falle eines Defekts oder einer Beschädigung.

Die Rastverbindung wird gemäß Fig. 5 realisiert durch das Vorsehen mindestens eines Rastelements 106' an der Lichtscheibe 102' und einer zur Aufnahme des Rastelements 106' geeigneten Ausnehmung 107' im Kunststoff der Außenhaut. Je nach Gestaltung der Rastelements 106' und der Ausnehmung 107' wird eine lösbare oder unlösbare Rastverbindung erreicht.

## Patentansprüche

1. Eine in die aus kunststoff gefertigte Außenhaut eines Kraftfahrzeuges eingearbeitete Kraftfahrzeugleuchte mit einer aus Kunststoff gefertigten Lichtscheibe (12) und einer hinter der Oberfläche der Lichtscheibe angebrachten Leuchteinheit (13, 14),
wobei,
die Lichtscheibe durch ein Mehrkomponenten-Spritzguss-Verfahren in die aus Kunststoff gefertigte Außenhaut (11) eines Kraftfahrzeugs eingearbeitet ist,
wobei die Leuchteinheit als Ergebnis des Mehrkomponenten-Spritzguss-Verfahrens zumindest teilweise formschlüssig vom Kunststoff der Lichtscheibe ummantelt und durch die Ummantelung lagefest an der Lichtscheibe befestigt
und wobei die Leuchteinheit als Ergebnis des Mehrkomponenten-Spritzguss-Verfahrens teilweise formschlüssig vom Kunststoff der Außenhaut ummantelt ist.

2. Kraftfahrzeugleuchte nach Anspruch 1, **dadurch gekennzeichnet, dass** die Leuchteinheit aus einem Schaltungsträger (13) und zumindest einem auf dem Schaltungsträger angebrachten Leuchtmittel (14) besteht.

3. Kraftfahrzeugleuchte nach einem der Ansprüche 1 oder 2, **dadurch gekennzeichnet, dass** die Leuchteinheit vollständig formschlüssig vom Kunststoff der Lichtscheibe ummantelt ist.

## Claims

1. A motor vehicle light incorporated in the outer skin, which is manufactured from plastics material, of a motor vehicle, comprising a light disc (12) manufactured from plastics material and a light unit (13, 14) attached behind the surface of the light disc, wherein the light disc is incorporated into the outer skin (11), which is manufactured from plastics material, of a motor vehicle by means of a multi-component injection moulding method, wherein the light unit is at least partially positively encased by the plastics material of the light disc as a result of the multi-component injection moulding method and fixed firmly in position on the light disc by the casing, and wherein the light unit is partly positively encased by the plastics material of the outer skin as a result of the multi-component injection moulding method.

2. A motor vehicle light according to claim 1, **characterised in that** the light unit consists of a circuit carrier (13) and at least one light means (14) attached to the circuit carrier.

3. A motor vehicle light according to either of claims 1 or 2, **characterised in that** the light unit is completely positively encased by the plastics material of the light disc.

## Revendications

1. Feux de véhicule automobile intégrés dans la peau extérieure en matière plastique du véhicule comportant une plaque lumineuse (12) en matière plastique et un module de lumière (13, 14) installé derrière la surface supérieure du disque lumineux,
• la plaque lumineuse étant intégrée par un procédé d'injection à plusieurs composants dans la pellicule extérieure (11) fabriquée en matière plastique d'un véhicule automobile,
• le module de lumière étant enrobé au moins partiellement par une liaison par la forme dans la matière plastique de la plaque lumineuse comme résultant du procédé d'injection multi-composants en étant fixé solidairement en position sur la plaque lumineuse par l'enrobage,
• le module de lumière est enveloppé par la matière plastique de la peau extérieure, en partie par une liaison par la forme comme résultant du procédé d'injection multi-composant.

2. Feux de véhicule automobile, selon la revendication 1,
**caractérisé en ce que**
l'unité d'éclairage se compose d'au moins un support de circuit (13) et d'au moins un moyen d'éclairage (14) installé sur le support de circuit.

3. Feux de véhicule automobile, selon l'une des revendications 1 ou 2,
**caractérisé en ce que**
le module de lumière est enveloppé complètement par une liaison par la forme de la matière plastique de la plaque lumineuse.
